# EUROPÄISCHE PATENTSCHRIFT

(11) **EP 0 655 816 B1**
(45) Veröffentlichungstag und Bekanntmachung des Hinweises auf die Patenterteilung: **11.09.2002**
(21) Anmeldenummer: 95101485.1
(22) Anmeldetag: 03.02.1995
(51) Int. Cl.: F16M 11/00

(54) **Montagesystem**
Mounting device
Dispositif de montage

(43) Veröffentlichungstag der Anmeldung: 31.05.1995
(73) Patentinhaber: Electrolux AG, 8048 Zürich (CH)
(72) Erfinder: Tischhauser, Hans, CH-5620 Bremgarten (CH); Schroeder, Walter, CH-8820 Wädenswil (CH)
(74) Vertreter: Troesch Scheidegger Werner AG

(56) Entgegenhaltungen:
- BE-A- 648 504
- DE-A- 4 027 556
- DE-U- 8 436 146
- DE-U- 9 309 467
- FR-A- 2 141 506
- US-A- 5 165 644

## Beschreibung

Die vorliegende Erfindung betrifft ein Montagesystem nach dem Oberbegriff von Anspruch 1, eine auf der Basis dieses Systems montierte Konsolenanordnung nach Anspruch 10 und Verwendungen des Montagesystems bzw. der Konsolenanordnung nach Anspruch 11.

### Definition:

Als Konsole wird nachfolgend grundsätzlich ein wannenartiges Gebilde verstanden, worin Einrichtungen montierbar sind und die in den freien Raum herausragt, sei dies, um gut bedienbar oder sichtbar zu sein oder aus rein ästhetischen Gründen.

Es ist bekannt, derartige Konsolen, wie für Anzeige- und/oder Steuerpanels, beispielsweise für Maschinensteuerungen, im Zusammenhang mit Telefonapparaten oder auch für Lautsprecher, für Wasserbatterien etc., mit einem starren Montagehals zu montieren oder mittels eines flexiblen, biegbaren Halses.

Während bei flexiblem Hals der Verwender die Konsolenposition jederzeit verändern kann, erfordert ein Montagesystem für derartige Konsolen mit starrem Hals aufgrund der kaum abschliessend aufzählbaren Einsatzmöglichkeiten eine grosse Zahl insbesondere von Halsformen. Dies ist insbesondere dort ausgesprochen, wo Konsole und Hals gar einteilig sind.

Beispielsweise ist es bekannt, bei Kücheninstallationen Steuer- und Anzeigepanels für Kochherde und Backofen an halsmontierten Konsolen vorzusehen, und je nachdem, ob eine Montage auf einer Horizontalfläche oder hängend unter einer Horizontalfläche oder an einer Vertikalfläche vorzunehmen ist, unterschiedliche Konsolen und insbesondere Halspartien einzusetzen, jeweils sicherstellend, dass die Wannenöffnung, woran, bei montiertem Aggregat, die Bedienungs- oder Betrachtungsfläche freiliegt, für eine Bedienungsperson richtig im Raum ausgerichtet ist.

Aus der US-A- 5 165 644 ist ein Montagesystem eingangs genannter Art bekannt. Daran ist ein Montagehals vorgesehen, welcher einen linearen Abschnitt mit einer Halsendfläche umfasst sowie einen an den linearen Abschnitt anschliessenden Bogenabschnitt, welcher mit einem Montagerohr für die Wandmontage fest verbunden ist. Die Konsole weist eine asymmetrische dachfirstförmige Partie auf, woran eine Fläche der dachfirstförmigen Partie breiter ist als die andere. Die Konsole ist wannenförmig ausgebildet und weist eine weitere symmetrische, im wesentlichen rechtwinklige dachfirstförmige Partie auf, woran die Flächen gleich breit sind.

Die Konsole wird am linearen Abschnitt des Montagehalses so befestigt, dass die eine Fläche der symmetrischen dachfirstförmigen Konsolenpartie parallel zur Linearausdehnung des erwähnten Montagehalsabschnittes zu liegen kommt.

Die vorliegende Erfindung setzt sich zum Ziel, ausgehend von einem Montagesystem letztgenannter Art, höchstmögliche Flexibilität dahingehend zu erzielen, wie die räumliche Montage des Systems vorgenommen werden soll.

Zu diesem Zweck zeichnet sich das Montagesystem eingangs genannter Art nach dem kennzeichnenden Teil von Anspruch 1 aus.

Bevorzugte Ausführungsvarianten zeichnen sich nach den Ansprüchen 2 bis 9 aus, eine Konsolenanordnung, die vom genannten System Gebrauch macht, nach Anspruch 10, bevorzugte Verwendungen davon nach Anspruch 11.

Einrichtungen, wie Beleuchtungskörper, Steuerungen, Absaug- oder Einblassysteme, Lautsprecher etc., können mit einer Konsolenanordnung nach Anspruch 10 eingerichtet sein.

Die Erfindung wird anschliessend beispielsweise anhand von Figuren erläutert.

Es zeigen:
- Fig. 1: montierte Konsolenanordnungen, die das Montagesystem verwenden und aufzeigen;
- Fig. 2: ein bevorzugterweise am erfindungsgemässen System und an der erfindungsgemässen Konsolenanordnung eingesetzter Montagehals;
- Fig. 3: eine bevorzugte Ausführungsform einer Konsole im Querschnitt;
- Fig. 4: eine bevorzugte Ausführungsform einer Montageplatte, durch welche das Montagesystem bevorzugterweise erweitert wird;
- Fig. 5: schematisch, Verbindungsorgane für Hals, Konsole und Montageplatte des erfindungsgemässen Systems.

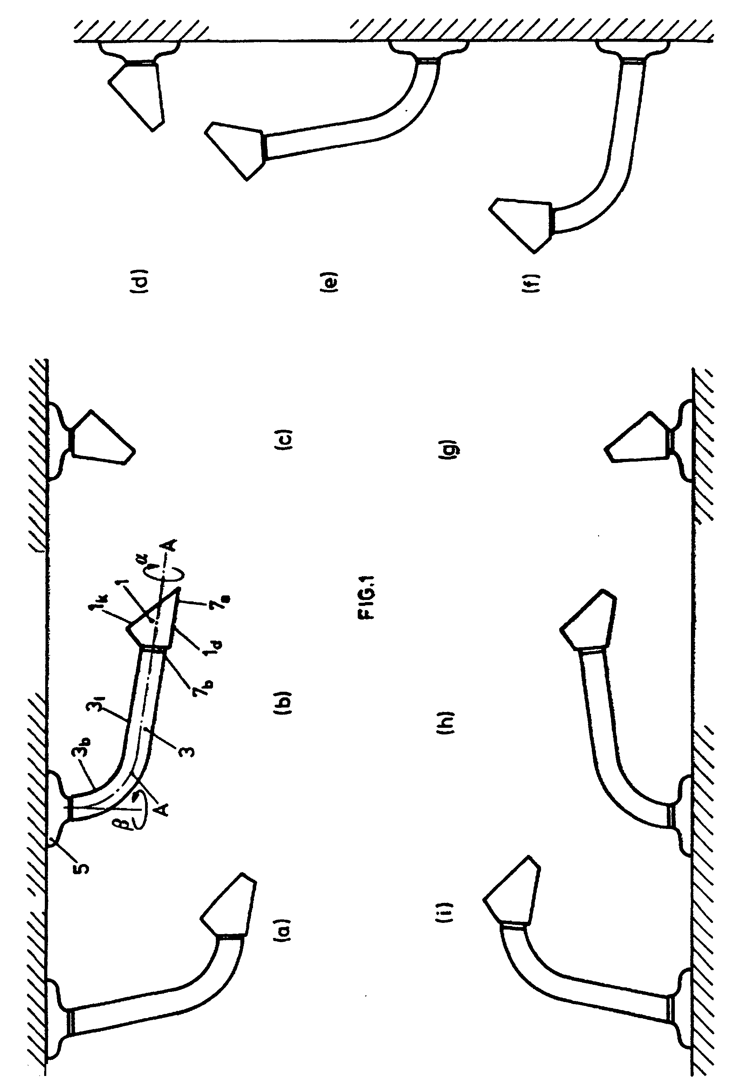

In Fig. 1 sind mit (a) und (b) hängende Konsolenanordnungen mit dem erfindungsgemässen Montagesystem dargestellt, mit (e) und (f) derartige Anordnungen an einer vertikalen Wand und mit (h) und (i) stehende Anordnungen auf einer Standfläche. Die dargestellten Beispiele, wie mit Hilfe des erfindungsgemässen Montagesystems die Konsole montiert werden kann, sind nicht abschliessend.

Der grundsätzliche Systemaufbau soll vorerst anhand des Beispiels (b) von Fig. 1 dargestellt werden.

Das erfindungsgemässe System umfasst eine wannenförmige Gerätekonsole 1 und einen Montagehals 3. Letzterer ist zum Anschluss der in der Konsole 1 einzubauenden Geräte als Hohlrohr ausgebildet. Der Hals 3 ist in einer Ebene gebogen und weist einen ersten linearen Abschnitt 3ₗ auf, welcher sich mindestens bis zur Hälfte der entlang der Achse A gemessenen Längsausdehnung des Halses 3 erstreckt. Er weist weiter einen zweiten, stetig gebogenen Abschnitt 3_{b} auf. Die Konsole ihrerseits weist eine dachfirstförmige Partie 1_{d} auf, welche in bevorzugter Weise auf einer kubusförmigen 1ₖ aufgesetzt ist, wobei bevorzugterweise die beiden Konsolenpartien 1_{d}, 1ₖ einteilig ausgebildet sind.

Im weiteren ist für das erfindungsgemässe Montagesystem bevorzugterweise eine Montageplatte 5 vorgesehen. Formschlüssige Verbindungsorgane sind einerseits an einer der Flächen 7ₐ bzw. 7_{b} der dachfirstförmigen Konsolenpartie 1_{d} vorgesehen, bezüglich ihrer Längsausdehnung mittig, und wirken formschlüssig mit entsprechenden Verankerungspartien am einen Ende des Halses 3 zusammen. Bevorzugterweise, und wie dargestellt, sind die Verbindungsorgane an der weniger breiten der beiden die Dachfirstpartie aufspannenden Flächen 7ₐ, 7_{b} vorgesehen.

Bevorzugterweise sind weiter beide Enden des Halses 3 gleich ausgebildet, so dass, wie der Vergleich beispielsweise von Montagevariante (b) mit Montagevariante (a) zeigt, die Konsole 1 an jedem der beiden Halsenden montiert werden kann. Eine bevorzugterweise vorgesehene Montageplatte 5 ist ebenfalls mit den Halsenden formschlüssig verbindbar.

Wie für den Fachmann ohne weiteres ersichtlich, werden die Verbindungsorgane von Konsole/Hals/Montageplatte mittels entsprechender Einnehmungen und Ausformungen an den Halsenden und/oder an Konsole und Montageplatte gebildet, wobei in bevorzugter Art und Weise und mit Blick auf Fig. 1 die Konsole 1 bezüglich der Achse A in beiden um 180° versetzten, gegebenenfalls gar in allen vier um 90° versetzten Positionen montierbar ist, ebenfalls der Hals 3, wie mit dem Drehwinkel β angegeben, bezüglich der Montageplatte 5.

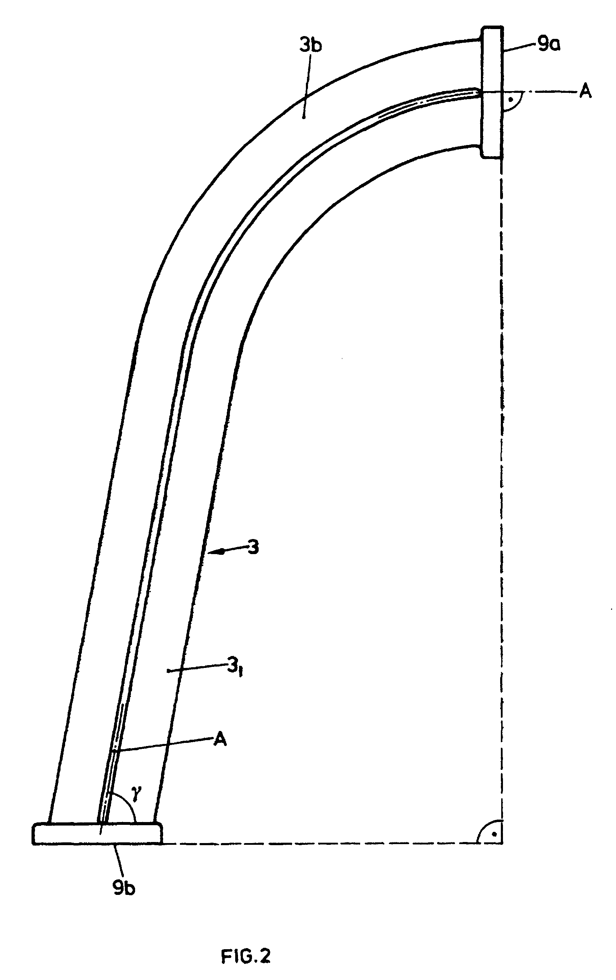

Wie aus Fig. 2 ersichtlich, weist der Hals zwei Endflächen 9a und 9b auf. Eine dieser beiden Flächen, in bevorzugter Realisationsform, wie in Fig. 2 gezeigt, die an der linearen Partie 3ₗ, ist bezüglich der dortigen Richtung der Halsachse A schiefwinklig angeordnet, bevorzugterweise beträgt der Winkel γ 60° bis 85°, vorzugsweise ca. 80°. Die zweite Endfläche, 9a, steht vorzugsweise mindestens genähert senkrecht bezüglich der dortigen Richtung der Achse A, wobei die beiden Flächen 9a und 9b bevorzugterweise zwischen sich einen Winkel von mindestens genähert 90° aufspannen.

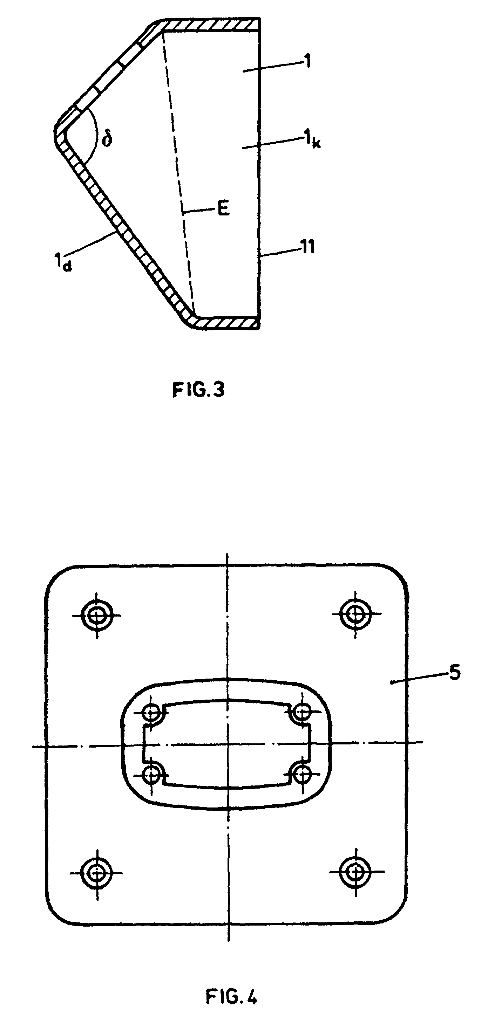

In Fig. 3 ist die Wanne 1 im Querschnitt vergrössert dargestellt. Daraus ist deutlich die dachfirstförmige Partie 1_{d} und die kubusförmige 1ₖ ersichtlich; gestrichelt ist der Uebergangsbereich von kubusförmiger zu dachfirstförmiger Partie eingetragen. Der Firstwinkel δ ist bevorzugterweise grösser als 90°, beträgt dabei vorzugsweise mindestens genähert 100°.

Wie weiter ersichtlich, ist die Schnittebene durch die kubusförmige Partie 1ₖ, welche der gestrichelten Linie in Fig. 3 entspricht und deshalb mit E bezeichnet ist, bezüglich der die Wannenöffnung definierenden, im wesentlichen ebenen Umrandung 11 der kubusförmigen Partie 1ₖ schief.

Die bevorzugterweise eingesetzte Montageplatte 5 ist in Aufsicht in Fig. 4 dargestellt. Weil in vielen Fällen die Konsolenmontage an Orten vorgenommen werden wird, wo in unmittelbarer Umgebung elektrische Steckdosen vorgesehen sind oder an der Konsole 1 vorzusehende Geräte an das Installationsnetz anzuschliessen sind, wird in bevorzugter Ausführungsform die Dimensionierung der Montageplatte 5 den jeweils für Hausinstallationen gebräuchlichen, normierten Steckdosenabdeckungen angepasst, so dass die Montageplatte 5 wie die Abdeckplatte einer elektrischen Steckdose montierbar ist.

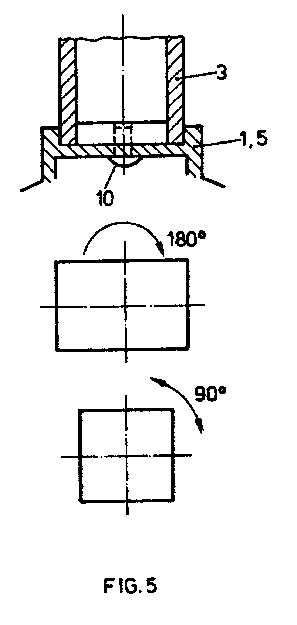

Obwohl sich für den Fachmann aus den bisherigen Ausführungen viele Realisationsmöglichkeiten für die gegenseitige Verbindung von Hals, Konsole und Montageplatte eröffnen, ist in Fig. 5 schematisch eine solche Verbindung dargestellt, einerseits zwischen Konsole und beiden Halsenden, anderseits zwischen beiden Halsenden und Montageplatte. Der in Fig. 5 nur schematisch dargestellte Hals 3 steckt z.B. formschlüssig in einer entsprechenden Einnehmung von Konsole und/oder Montageplatte 1 bzw. 5. Im Bereiche der Halswandung sind im Hals Bohrungen vorgesehen, in welche, vom Inneren der Konsole her bzw. von der Montageplatte-Rückseite her, Schraubbolzen 10 eingeschraubt werden. Wie weiter in Fig. 5 ersichtlich, ergibt die bevorzugterweise eingesetzte, rechteckförmige Querschnittsform des Halses 3 die Möglichkeit, Konsole bezüglich Hals und Hals bezüglich Montageplatte jeweils um 180° gedreht zu montieren, entsprechend den Versatzwinkeln β und α von Fig. 1. Wird der Querschnitt des Halses 5 quadratisch oder kreisförmig gewählt, wie ebenfalls in Fig. 5 dargestellt, ergibt sich die Möglichkeit, die Stellwinkel α bzw. β zu 90° zu wählen.

Durch den als Hohlrohr ausgebildeten Hals 3 werden elektrische Leitungen, optische Kabel und gegebenenfalls auch Wasserleitungen geführt. Beispielsweise kann in Fig. 1(i) die Konsole 1 um 180° gedreht werden und als Verschalung einer Wasserbatterie eingesetzt werden. Dies z.B. wenn andere Aggregate, wie Beleuchtungskörper, Steuerpanels für Kochgerät und Backofen, mit dem gleichen Konsolensystem im gleichen Raum aufgebaut werden.

Für den Einsatz als Dunstabsaughaube oder, generell, Ausoder Einlass für eine Klimatisation kann der als Hohlrohr ausgebildete Hals direkt als Leitungsrohr eingesetzt werden.

Wie aus den Fig. 1(c), (d) und (g) ersichtlich, ergibt sich auch die Möglichkeit, die Konsole 1 direkt, d.h. ohne Hals, auf der Montageplatte 5 zu montieren, dies ist jedoch nicht Gegenstand der vorliegenden Ansprüche. Alle in Fig. 1 dargestellten und weitere Einbaumöglichkeiten, die sich unter anderem aus den Schwenkmöglichkeiten α bzw. β ergeben, lassen sich mit den drei vorgesehenen, gleichen Teilen des Montagesystems realisieren.

Dadurch, dass sich mit denselben Teilen, wie beispielsweise aus Fig. 1 ersichtlich, flexibel viele Einbaumöglichkeiten ergeben, wird ein äusserst kostengünstiges Montagesystem realisiert, u.a. weil sich beispielsweise die Lagerhaltung auf die drei gezeigten Teile beschränkt.

## Patentansprüche

1. Montagesystem für und mit einer wannenförmigen Gerätekonsole (1) und einem Montagehals (3), wobei der Montagehals (3) in einer Ebene einen linearen Abschnitt (3ₑ) aufweist, der eine Halsendfläche (9_{b}) definiert und einen anschliessenden Bogenabschnitt (3_{b}) aufweist und wobei weiter die Konsole (1) eine asymmetrische dachfirstförmige Partie (1_{d}), woran eine Fläche (7ₐ) breiter ist als die andere, aufweist, **dadurch gekennzeichnet, dass** der Bogenabschnitt (3_{b}) die zweite Halsendfläche (9ₐ) bildet und Verbindungsorgane an einer der Flächen (7ₐ, 7_{b}) der dachfirstförmigen Partie (1_{d}) vorgesehen sind, welche ermöglichen, wahlweise eine Verbindung mit einer der beiden Halsendflächen (9ₐ, 9_{b}) zu erstellen.

2. Montagesystem nach Anspruch 1, **dadurch gekennzeichnet, dass** die eine oder andere Halsendfläche (9ₐ, 9_{b}) bezüglich der Achsenrichtung (A) des Montagehalses (3) an diesem Ende schiefwinklig (γ) geneigt ist, vorzugsweise am linearen Teil (3ₗ) angeordnet ist und vorzugsweise um 60° bis 85°, vorzugsweise um ca. 80° zur Achsrichtung (A) geneigt ist und dass die andere Halsendfläche (9ₐ) mit der ersterwähnten (9_{b}) vorzugsweise einen Winkel von wenigstens ungefähr 90° aufspannt, wobei weiter vorzugsweise die andere Halsendfläche (9ₐ) mindestens genähert senkrecht zur dortigen Richtung der Achse (A) steht.

3. Montagesystem nach einem der Ansprüche 1 oder 2, **dadurch gekennzeichnet, dass** der Firstwinkel (δ) an der Konsole (1) mindestens 90° ist, vorzugsweise ca. 100° beträgt.

4. Montagesystem nach einem der Ansprüche 1 bis 3, **dadurch gekennzeichnet, dass** wannenöffnungsseitig (11) an die firstförmige Partie (1_{d}) eine kubusförmige (1ₖ) anschliesst.

5. Montagesystem nach einem der Ansprüche 1 bis 4, **dadurch gekennzeichnet, dass** der Halsquerschnitt im wesentlichen rechteckförmig oder quadratisch ist.

6. Montagesystem nach einem der Ansprüche 1 bis 5, **dadurch gekennzeichnet, dass** eine Montageplatte (5) vorgesehen ist und beide Halsendflächen (9ₐ, 9_{b}) wahlweise an Konsole (1) und Montageplatte (5) befestigbar sind.

7. Montagesystem nach Anspruch 6, **dadurch gekennzeichnet, dass** formschlüssige Verbindungsorgane zwischen beiden Halsenden, Konsole und Montageplatte vorgesehen sind.

8. Montagesystem nach einem der Ansprüche 6 oder 7, **dadurch gekennzeichnet, dass** die Montageplatte (5) bezüglich Grösse einer Norm für elektrische Steckdosenabdeckungen in Hausinstallationen entspricht.

9. Montagesystem nach einem der Ansprüche 1 bis 8, **dadurch gekennzeichnet, dass** der lineare Abschnitt (3ₑ) mindestens 25% der axialen Halslänge ist, vorzugsweise mindestens 50%.

10. Montierte Konsolenanordnung mit einer Konsole und einem Hals nach einem der Ansprüche 1 bis 9.

11. Verwendung des Montagesystems nach einem der Ansprüche 1 bis 9 oder der Konsolenanordnung nach Anspruch 10 für Beleuchtungskörper, Steuerungs- und/oder Anzeigefelder, Luft-Ein- und/oder -Auslässe, wie Absaugungen in Küchen, Wasserbatterien, insbesondere in Küchen, dabei insbesondere für Steuer- und Anzeigefelder von Koch- bzw. Backeinrichtungen.

## Claims

1. Mounting device for and with a tub shaped console (1) and an bracket (3), whereby the bracket (3) comprises in one plane a linear part (3ₑ), which defines a neck end face (9_{b}) and an adjoining arc sector (3_{b}) and whereby the console (1) comprises an asymmetrically part in form of a ridge of a roof (1_{d}), on which one of the planes (7ₐ) is wider than the other, **characterized in that** the arc sector (3_{b}) is forming the second end plane (9ₐ) and that connecting elements are designated on one of the planes (7ₐ, 7_{b}) of the part (1_{d}) allowing to establish a connection with one of the two neck end faces (9ₐ, 9_{b}) alternatively.

2. Mounting device according claim 1, **characterized in that** one or the other of the neck end faces (9ₐ, 9_{b}) is inclined oblique (γ) in relation to the axis (A) of the bracket (3) at this end, preferably arranged at the linear part (3ₗ) and preferably inclined between 60° and 85°, preferably inclined at an angle of 80° in relation to the axis (A) and that the other neck end face (9ₐ) is building up an angle of at least approximately 90°, whereby further preferably the other neck end face (9ₐ) is standing at least approximately perpendicular in relation to the axis (A).

3. Mounting device according to one of claims 1 or 2, **characterized in that** the ridge angle (δ) of the console (1) is at least 90°, preferably 100°.

4. Mounting device according to one of claims 1 to 3, **characterized in that** on the opening side of the tub (11) a cubus shaped part (1ₖ) is following the part in form of a ridge of a roof (1_{d}).

5. Mounting device according to one of claims 1 to 4, **characterized in that** the cross section of the bracket is at the most rectangular or square.

6. Mounting device according to one of claims 1 to 5, **characterized in that** a mounting collar (5) is provided, and that both neck end faces (9ₐ, 9_{b}) are securable onto the console (1) or the mounting collar (5) alternatively.

7. Mounting device according to claim 6, **characterized in that** form taking connection parts are provided between both end neck planes, console and mounting collar.

8. Mounting device according to one of claims 6 or 7, **characterized in that** the mounting collar (5) has a shape according standards for plug-in socket covers in household installations.

9. Mounting device according to one of claims 1 to 8, **characterized in that** the linear part (3ₑ) has a length of at least 25% of the axial length of the bracket, preferably 50%.

10. Mounted console arrangement with a console and a bracket according to one of claims 1 to 9.

11. Use of the mounting device according to one of claims 1 to 9 or the mounted console arrangement according claim 10 for illuminating objects, control- and/or display fields, air -intake and/or -outlets, such as suction devices in kitchens, water batteries, especially in kitchens, thereby especially for the control- and display fields of cooking and baking facilities.

## Revendications

1. Dispositif de montage pour et avec une console (1) en forme de cuve pour unités périphériques et un manchon de montage (3), le manchon de montage (3) présentant une section linéaire (3ₑ) dans un plan définissant une surface de manchon terminale (9_{b}) et une section courbe (3_{b}) en suite et la console (1) présentant une partie (1_{d}) en forme d'une arête de toit asymétrique avec une surface (7ₐ) plus large que l'autre, **caractérisé en ce que** la section courbe (3_{b}) forme la seconde surface de manchon terminale (9ₐ) et **en ce que** des organes de raccordement sont prévus sur l'une des surfaces (7ₐ, 7_{b}) de la partie (1_{d}) en forme d'arête de toit qui permettent à volonté d'établir un raccordement avec l'une des deux surfaces de manchon terminales (9ₐ, 9_{b}).

2. Dispositif de montage selon la revendication 1, **caractérisé en ce que** l'une ou l'autre desdits surfaces de manchon terminales (9ₐ, 9_{b}) est inclinée (γ) à l'extrémité correspondante par rapport à l'axe (A) du manchon de montage (3), de préférence prévue sur la partie linéaire (3ₗ) avec une inclinaison préférée de 60° à 85°, de préférence environ 80°, par rapport à l'axe (a) et **en ce que** l'autre surface de manchon terminale (9a) engendre avec ladite première surface (9a) de préférence un angle d'au moins approximativement 90°, avec également de préférence l'autre surface de manchon terminale (9a) s'étendant au moins approximativement à l'angle droit par rapport à la direction de l'axe (A) à cet endroit.

3. Dispositif de montage selon l'une des revendications 1 ou 2, **caractérisé en ce que** l'angle de l'arête (δ) à la console (1) est au moins 90°, de préférence environ 100°.

4. Dispositif de montage selon l'une des revendications 1 à 3, **caractérisé en ce que** du côté de l'ouverture de la cuve (11) la partie en forme d'arête de toit (1d) est suivie d'une partie en forme de cube (1ₖ).

5. Dispositif de montage selon l'une des revendications 1 à 4, **caractérisé en ce que** la section de manchon est essentiellement rectangulaire ou carrée.

6. Dispositif de montage selon l'une des revendications 1 à 5, **caractérisé en ce qu'**une plaque de montage (5) est prévue et **en ce que** les deux surfaces de manchon terminales (9ₐ, 9_{b}) peuvent être à volonté fixées soit à la console (1) soit à la plaque de montage(5).

7. Dispositif de montage selon la revendication 6, **caractérisé en ce que** des organes de raccordement clabotés sont prévus entre les deux surfaces de manchon terminales, la console et la plaque de montage.

8. Dispositif de montage selon l'une des revendications 6 ou 7, **caractérisé en ce que** la plaque de montage (5) répond en ce qui concerne les dimensions à la norme pour recouvrement de prises pour installations électriques domestiques.

9. Dispositif de montage selon l'une des revendications 1 à 8, **caractérisé en ce que** la section linéaire (3ₑ) correspond à au moins 25 % de la longueur axiale du manchon, de préférence à au moins 50 %.

10. Arrangement de console monté avec une console et un manchon de montage selon l'une des revendications 1 à 9.

11. Utilisation du dispositif de montage selon l'une des revendications 1 à 9 ou de l'arrangement de console selon la revendication 10 pour des armatures d'éclairage, des champs de commande et/ou de visualisation, des entrées et/ou sorties d'air, comme par exemples ventilations de cuisine, des batteries d'eau, notamment pour cuisines, et plus particulièrement des champs de commande et de visualisation pour cuisinières et fours.
